# EUROPÄISCHE PATENTSCHRIFT

(11) **EP 3 057 844 B1**
(45) Veröffentlichungstag und Bekanntmachung des Hinweises auf die Patenterteilung: **18.12.2019**
(21) Anmeldenummer: 14786168.6
(22) Anmeldetag: 15.10.2014
(51) Int. Cl.: B61C 15/10, B05C 19/04, B05C 19/06, F16K 31/122

(54) **DOSIEREINRICHTUNG FÜR GRANULAT**
METERING DEVICE FOR GRANULAR MATERIAL
DISPOSITIF DE DOSAGE DE GRANULÉS

(30) Priorität: 15.10.2013 AT 506642013
(43) Veröffentlichungstag der Anmeldung: 24.08.2016
(73) Patentinhaber: Nowe GmbH, 31008 Elze (DE)
(72) Erfinder: BARTLING, Werner, 31008 Elze (DE)
(74) Vertreter: Sonn & Partner Patentanwälte
(86) Internationale Anmeldenummer: PCT/EP2014/072129
(87) Internationale Veröffentlichungsnummer: WO 2015/055723

(56) Entgegenhaltungen:
- WO-A1-2010/031831
- DE-A1- 3 410 409
- FR-A- 593 382
- FR-A- 803 127
- FR-A- 813 959
- FR-A1- 2 267 501
- US-A- 1 852 505

## Beschreibung

Die Erfindung betrifft eine Dosiereinrichtung für Granulat, mit einem im Inneren eines Behälters für das Granulat anordenbaren Gehäuse mit zumindest einer Zulauföffnung für das Granulat und einem Auslass, welcher Auslass mit einem Abdichtelement verschließbar ist.

Unter dem Begriff "Granulat" ist ein körniger bis pulverförmiger, leicht schüttbarer Feststoff zu verstehen, beispielsweise Streugut oder Streusand, wie er zur Verbesserung der Bremswirkung zwischen den Rädern von Fahrzeugen und der Fahrbahn eingesetzt wird. Beispielsweise wird bei Schienenfahrzeugen Granulat bzw. Sand von einem Behälter über eine Dosier- und Fördereinrichtung über eine Düse vor den Schienenrädern in den Spalt zwischen Schienenrad und Schiene befördert, um den Reibungswiderstand zwischen Schienenrad und Schiene zu erhöhen und den Bremsweg zu verringern.

Die EP 2 326 519 B1 beschreibt eine derartige Sanddosiereinrichtung für Sandstreusysteme für Fahrzeuge, wobei die Sanddosierung über einen elektrisch betätigbaren Hubmagneten vorgenommen wird. Die Förderung des Granulats bzw. Sandes nach der Dosiereinrichtung kann auf verschiedene Methoden, beispielsweise mechanisch oder pneumatisch, erfolgen.

Die DE 297 21 340 U1 zeigt eine Sanddosiereinrichtung, welche im Sandvorratsbehälter angeordnet ist mit einem Ventil in der Austrittsöffnung, welches über Druckluft angesteuert wird. Bei geöffnetem Ventil strömt Sand vom Sandvorratsbehälter durch die Austrittsöffnung.

Die FR 593 382 A zeigt eine druckluftbetätigte, in einem Sandvorratsbehälter angeordnete Sanddosiereinrichtung, wobei die Austrittsöffnung durch ein Ventil von der Unterseite verschlossen wird.

Aus der DE 34 10 409 A1 ist eine Sandungsvorrichtung für Schienenfahrzeuge mit einem seitlich bewegbaren Dosierkolben und einer Druckluftzuführung zur Förderung des dosierten Sandes an die gewünschte Stelle, insbesondere vor das Rad des Schienenfahrzeugs, bekannt geworden. Das gesamte Gewicht des Sandes lastet dabei auf dem Sandeinlass, weshalb es insbesondere bei feuchtem Sand zu Blockaden kommen kann. Darüber hinaus kann Feuchtigkeit in den Sandbehälter gelangen und dort zu einer Verklumpung bzw. zumindest Verschlechterung der Rieselfähigkeit des Sandes führen.

Die FR 813 969 zeigt eine Konstruktion einer Dosiereinrichtung, bei der die Zulauföffnung unterhalb des Granulatbehälters angeordnet ist und durch eine Klappe verschlossen wird. Auch in diesem Fall wirkt in nachteiliger Weise die gesamte Kraft des Granulats im Granulatbehälter auf die Zulauföffnung bzw. verschließende Klappe, weshalb die Betätigung der Klappe erschwert und eine genaue Dosierung nicht ermöglicht wird.

Weitere Sanddosiereinrichtungen, welche im Inneren des Sandvorratsbehälters angeordnet sind, und mit Hilfe von Druckluft betätigt werden, sind in der GB 857,246 A oder der EP 656 292 A1 offenbart.

Nachteilig bei manchen bekannten Dosiereinrichtungen ist, dass verschiedene Energieformen und Energiequellen, beispielsweise elektrische Energie für die Betätigung des Hubmagneten der Dosiereinrichtung und Druckluft für die Beförderung des Granulats, erforderlich sind. Nachdem insbesondere in älteren Schienenfahrzeugen oder anderen Anlagen, wo eine Dosierung und Förderung eines Granulats erforderlich ist, oft nur Druckluft als Energiequelle vorhanden ist, scheiden manche elektrisch arbeitende Dosiereinrichtungen aus.

Die Aufgabe der vorliegenden Erfindung besteht daher in der Schaffung einer oben genannten Dosiereinrichtung für Granulat, welche ohne elektrische Energie betätigt werden kann. Insbesondere soll die erfindungsgemäße Dosiereinrichtung für das Nachrüsten bestehender Anlagen oder Fahrzeuge geeignet sein und einfach und rasch angewendet werden können.

Erfindungsgemäß ist vorgesehen, dass die zumindest eine Zulauföffnung seitlich am Gehäuse und schräg abwärts verlaufend angeordnet ist, das Abdichtelement an einem durch eine Feder vorgespannten axial in einem Druckluftzylinder verschiebbaren Dosierkolben angeordnet ist, wobei am Druckluftzylinder ein Druckluftanschluss vorgesehen ist, sodass der Dosierkolben mittels Druckluft gegen die Feder bewegbar und der Auslass öffenbar ist, wobei die Feder zumindest zweistufig ausgebildet ist, sodass der Hub des Dosierkolbens durch Variation des Drucks der Druckluft zumindest in zwei Stufen veränderbar ist, eine Einrichtung zum Einstellen des maximalen Hubes des Dosierkolbens vorgesehen, und im Bereich des Auslasses eine Buchse aus formstabilem Material angeordnet. Die gegenständliche Dosiereinrichtung kann somit ausschließlich mit Druckluft betrieben werden, welche bei manchen Anlagen oder Fahrzeugen, insbesondere Schienenfahrzeugen, ohnedies zur Verfügung steht. Die Konstruktion der gegenständlichen Dosiereinrichtung ist relativ einfach, robust und wartungsarm. Die Anordnung der zumindest einen Zulauföffnung seitlich am Gehäuse bietet dem Granulat eine optimale Zulaufmöglichkeit in die Dosiereinrichtung. Durch eine schräge Anordnung des Behälters für das Granulat einerseits und der Zulauföffnung bzw. Zulauföffnungen der Dosiereinrichtungen wird der schwerkraftbedingte Fluss des Granulats in Richtung Dosiereinrichtung unterstützt. Die Dosierung des Granulats erfolgt durch Einstellung des Hubes des Dosierkolbens und der Dauer der Öffnungsphasen des Dosierkolbens. Beim Einsatz der Dosiereinrichtung für ein Streusystem zur Verbesserung der Bremswirkung eines Schienenfahrzeuges wird der Dosierkolben während des Bremsvorganges ständig offen gehalten, sodass das Granulat bzw. der Sand während der gesamten Bremsung zwischen dem Schienenrad und der Schiene zur Erhöhung der Reibung befördert werden kann. Durch Veränderung des Drucks der Druckluft kann eine Änderung der Dosierung des Granulats vorgenommen werden. Eine stufenförmige Veränderung kann beispielsweise durch eine einzige Feder mit progressiver Federkennlinie erreicht werden oder durch mehrere Federn unterschiedlicher Federsteifigkeit. Erforderlich ist lediglich ein in zumindest zwei Stufen veränderbarer Druck der Druckluft. Durch eine derartige zwei- oder mehrstufige Dosierung kann beispielsweise eine geschwindigkeitsabhängige Dosierung des Granulats erzielt werden. Bei niedrigeren Geschwindigkeiten eines Schienenfahrzeugs kann im Bremsfall eine geringere Granulatmenge ausgetragen werden, wodurch auch die Staubbelastung gering gehalten werden kann, wohingegen bei höheren Geschwindigkeiten ein maximaler Granulataustrag für eine maximale Bremswirkung stattfindet. Durch die Einrichtung zum Einstellen des maximalen Hubes des Dosierkolbens kann die Menge an Granulat, welche bei geöffnetem Dosierkolben in die nachfolgende Fördereinrichtung gelangt, verändert werden. Durch die im Bereich des Auslasses angeordnete Buchse aus formstabilem Material kann einerseits die Abdichtung des Behälters für das Granulat während des geschlossenen Dosierkolbens verbessert werden und andererseits der Verschleiß der Komponenten der Dosiereinrichtung reduziert werden. Die Abdichtung des Abdichtelements des Dosierkolbens zur Buchse ist bei Granulat, welches nicht feucht werden darf, beispielsweise Sand, besonders wichtig, da es durch Eindringen von Feuchtigkeit in den Behälter für das Granulat zu einem Verklumpen des Granulats bzw. Sandes kommen kann, wodurch die Dosierung und Beförderung des Granulats erschwert oder blockiert werden kann.

Die Buchse ist vorzugsweise aus hoch verschleißfestem Kunststoff, beispielsweise ultrahochmolekularem Polyethylen, gebildet. Dadurch wird die Betriebsdauer der Buchse und der gesamten Dosiereinrichtung erhöht und das Wartungsintervall verlängert.

Das am Dosierkolben angeordnete Abdichtelement ist vorzugsweise aus verschleißfestem elastischem Material gebildet. Ein derartiges verschleißfestes elastisches Material, beispielsweise Polyurethan, bietet optimale Eigenschaften hinsichtlich der Abdichtung des Auslasses der Dosiereinrichtung und hinsichtlich eines Verschleißes durch eine Reibwirkung des Granulats. Natürlich kann der Dosierkolben auch einstückig mit dem Abdichtelement gebildet sein.

Wenn der Druckluftzylinder und der Dosierkolben senkrecht angeordnet ist, kann unter Ausnutzung der Schwerkraft ein optimaler Fluss des Granulats durch die Dosiereinrichtung ohne zusätzliche Hilfsmaßnahmen erzielt werden. Eine derartige Anordnung erleichtert auch den Ausbau und Einbau der Verschleißkomponenten, insbesondere des Abdichtelements und der Buchse am Auslass, welche unterhalb des Druckluftzylinders angeordnet sind.

Die Einstelleinrichtung kann beispielsweise durch eine Einstellschraube gebildet sein. Dies stellt die einfachste und kostengünstigste Möglichkeit zur Einstellung des maximalen Hubes des Dosierkolbens dar.

Eine stufenförmige Veränderung des Kolbenhubs kann beispielsweise durch Anordnung verschiedener Federn erzielt werden, wobei die erste Feder durch einen niedrigeren Druck und die zweite Feder durch einen höheren Druck zusammengedrückt werden kann. Erforderlich ist lediglich ein in zwei Stufen veränderbarer Druck der Druckluft.

Gemäß einer weiteren erfindungsgemäßen Ausführung kann die Buchse in Richtung der Achse des Dosierkolbens verstellbar sein, sodass der maximale Hub des Dosierkolbens veränderbar ist. Der Vorteil gegenüber einer Einstellschraube ist, dass zur Einstellung des maximalen Hubes des Dosierkolbens die Dosiereinrichtung nicht mehr aus dem Granulat-Vorratsbehälter ausgebaut werden muss, was einen erheblichen Aufwand darstellt, da der gesamte Vorratsbehälter entleert und wieder befüllt werden muss. Die Verstellung der Buchse kann in einfacher Weise von außen durchgeführt werden.

Vorzugsweise sind zwei gegenüberliegende Zulauföffnungen am Gehäuse der Dosiervorrichtung vorgesehen. Durch Anordnung mehrerer Zulauföffnungen kann die Menge an Granulat, welche bei geöffnetem Dosierkolben durch den Auslass gelangt, erhöht werden, ohne den Hub des Dosierkolbens vergrößern zu müssen.

Gemäß einem weiteren Merkmal der Erfindung ist die zumindest eine Zulauföffnung in einem Winkel von 30 bis 40° zur Horizontalen schräg abwärts verlaufend angeordnet.

An der Unterseite des Gehäuses können Befestigungselemente zur Befestigung einer Einrichtung zur Förderung des Granulats vorgesehen sein. Auf diese Weise wird die Verbindung mit der nachfolgenden Fördereinrichtung allenfalls unter Zwischenschaltung eines Dichtungselements erleichtert.

Gemäß einem weiteren Merkmal ist im Auslass ein Dichtring aus elastischem Material, vorzugsweise ein O-Ring, angeordnet, der eine ringförmige Dichtfläche bildet, auf der das Abdichtelement aufliegt, um den Auslass zu verschließen.

Zur Feineinstellung der auszutragenden Granulatmenge kann gemäß einer weiteren Ausführung eine Einrichtung zur Verformung des Dichtrings, beispielsweise eine gegen den Dichtring drehbare Schraubbuchse vorgesehen sein. Durch die elastische Deformation des Dichrings kann der Innendurchmesser des Dichtrings verändert und folglich die durchfließende Granulatmenge beeinflusst werden.

Die Erfindung wird anhand der beigefügten Zeichnungen näher erläutert. Darin zeigen:
- Fig. 1: eine Variante einer druckluftbetätigten Dosiereinrichtung in vertikal geschnittener Ansicht;
- Fig. 2: eine weitere Variante der druckluftbetätigten Dosiereinrichtung in vertikal geschnittener Ansicht; und
- Fig. 3: ein schematisches Blockschaltbild einer Verwendung der druckluftbetätigten Dosiereinrichtung in einer Sandstreueinrichtung;
- Fig. 4: eine weitere Variante einer druckluftbetätigten Dosiereinrichtung in vertikal geschnittener Ansicht; und
- Fig. 5: die druckluftbetätigte Dosiereinrichtung gemäß Fig. 4 in horizontal geschnittener Ansicht.

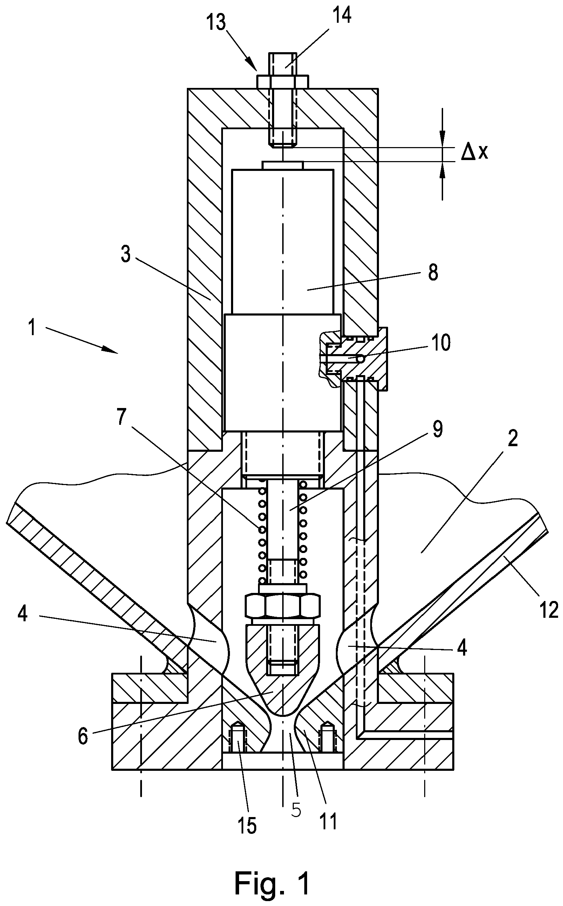

Fig. 1 zeigt eine Variante der druckluftbetätigten Dosiereinrichtung 1 in vertikal geschnittener Ansicht. Die Dosiereinrichtung 1 ist in einem Behälter 12 für das Granulat 2 angeordnet und umfasst ein Gehäuse 3. Vorzugsweise seitlich des Gehäuses 3 ist zumindest eine Zulauföffnung 4 für das Granulat 2 angeordnet. Vorzugsweise an der Unterseite der Dosiereinrichtung 1 ist zumindest ein Auslass 5 angeordnet, über welchen das Granulat in eine darunter liegende Einrichtung 16 zur Förderung des Granulats 2 weitergeleitet wird. Der zumindest eine Auslass 5 wird mit einem Abdichtelement 6 verschlossen. Erfindungsgemäß wird das Abdichtelement 6 an einem durch eine Feder 7 vorgespannten, axial in einen Druckluftzylinder 8 verschiebbaren Dosierkolben 9 angeordnet, wobei am Druckluftzylinder 8 ein Druckluftanschluss 10 vorgesehen ist, sodass der Dosierkolben 9 mittels Druckluft gegen die Feder 7 bewegbar und der Auslass 5 öffenbar ist. Erfindungsgemäß ist die Dosiereinrichtung 1 ausschließlich mit Druckluft betätigbar, welche über den Druckluftanschluss 10 in den Druckluftzylinder eingebracht und den Dosierkolben 9 gegen die Kraft der Feder 7 bewegt. Der Dosierkolben 9 wird solange in die geöffnete Position gebracht, solange Granulat 2 in die Fördereinrichtung 16 gefördert werden soll.

Die Feder 7 ist dabei vorzugsweise zweistufig ausgebildet, sodass bei Einbringung von Druckluft mit einem ersten Druck die erste Stufe der Feder 7 und bei Einbringung von Druckluft mit einem höheren Druck auch die zweite Stufe der Feder 7 überwunden bzw. zusammengepresst werden kann. Somit kann der Dosierkolben 9 mit zwei verschiedenen Hüben betätigt werden und somit eine Dosierung des Granulats 2 in zumindest zwei verschiedenen Stufen erfolgen. Bei Vorhandensein einer entsprechenden Druckregelung kann auch eine stufenlose Einstellung des Hubes Δx des Dosierkolbens 9 und somit eine stufenlose Einstellung der Dosiermenge an Granulat 2 erfolgen.

Vorzugsweise ist das Abdichtelement 6 bzw. der Dosierkolben 9 mit integriertem Abdichtelement 6 aus verschleißfestem, elastischem Material gebildet und im Bereich des Auslasses 5 eine Buchse 11, vorzugsweise aus formstabilem und hoch verschleißfestem Kunststoff, angeordnet. Somit wird eine optimale Abdichtung des Innenraums des Behälters 12 für das Granulat 2 erzielt und verhindert, dass während des Nichtgebrauchs eines Granulats 2 Feuchtigkeit in das Innere des Behälters 12 gelangt.

Um die Schwerkraft optimal ausnutzen zu können, ist der Druckluftzylinder 8 und der Dosierkolben 9 im Wesentlichen senkrecht im Inneren des Behälters 12 angeordnet und der Behälter 12 an der Unterseite abgeschrägt, sodass das Granulat 2 durch die Schwerkraft bedingt in Richtung Dosiereinrichtung 1 rieselt.

Auch die zumindest eine Zulauföffnung 4, vorzugsweise zwei gegenüberliegende Zulauföffnungen 4, sind schräg abwärts verlaufend, vorzugsweise in einem Winkel von 30-40° zur Horizontalen angeordnet, um das Rieseln des Granulats 2 zu erleichtern. Um den maximalen Hub Δxₘₐₓ des Dosierkolbens 9 einstellen zu können, kann eine Einstelleinrichtung 13, beispielsweise eine Einstellschraube 14, am oberen Ende des Dosierkolbens 9 angeordnet sein. An der Unterseite der Dosiereinrichtung 1 können Befestigungselemente 15 zur Befestigung der Fördereinrichtung 16 vorgesehen sein. Die Fördereinrichtung 16 kann verschiedenartig, beispielsweise mechanisch oder pneumatisch, ausgeführt werden.

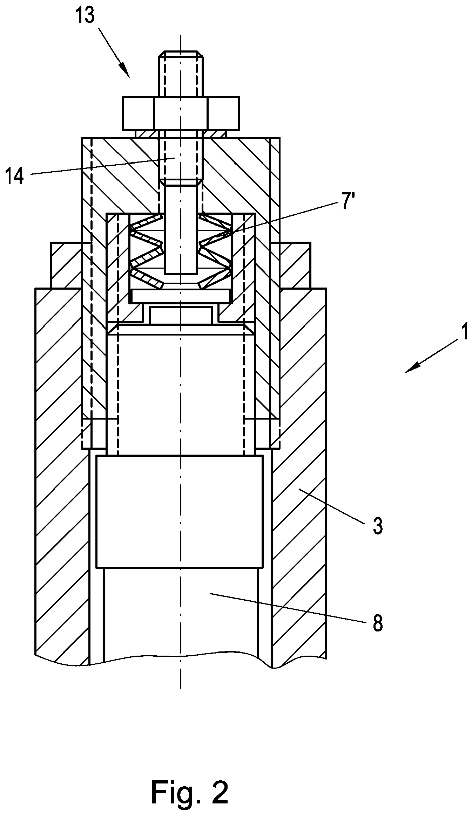

Fig. 2 zeigt eine weitere Variante der druckluftbetätigten Dosiereinrichtung in vertikal geschnittener Ansicht. Gegenüber der Ausführungsvariante gemäß Fig. 1 sind bei dieser Variante zwei Federn 7, 7' angeordnet, sodass bei Einbringung von Druckluft mit einem ersten Druck die erste Feder 7 und bei Einbringung von Druckluft mit einem höheren Druck auch die zweite Feder 7' überwunden bzw. zusammengepresst werden kann. Somit kann der Dosierkolben 9 mit zwei verschiedenen Hüben betätigt werden und somit eine Dosierung des Granulats 2 in zwei verschiedenen Stufen erfolgen. Bei Vorhandensein einer entsprechenden Druckregelung könnte auch eine stufenlose Einstellung des Hubes Δx des Dosierkolbens 9 und somit eine stufenlose Einstellung der Dosiermenge an Granulat 2 möglich sein.

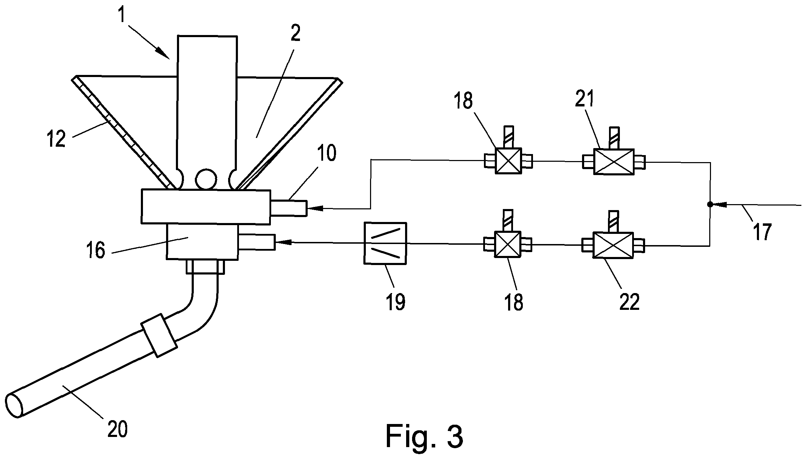

Fig. 3 zeigt ein schematisches Blockschaltbild einer Verwendung der druckluftbetätigten Dosiereinrichtung 1 in einer Sandstreueinrichtung. Die Dosiereinrichtung 1 ist innerhalb des Behälters 12 für das Granulat 2 angeordnet und mit einer darunter liegenden Einrichtung 16 zur Förderung des Granulats 2, insbesondere Sandes, verbunden. Über den Druckluftanschluss 10 wird die Dosiereinrichtung 1 mit Druckluft von einer Druckluftquelle 17 über ein Magnetventil 21 versorgt. Zur Einstellung des Druckes der Druckluft für den Druckluftzylinder 8 ist zumindest ein Druckregler 18 angeordnet. Auch die Fördereinrichtung 16 wird mit Druckluft von der Druckluftquelle 17 über ein Magnetventil 22 betätigt, welche über einen Druckregler 18 und allenfalls einer Reduzierdüse 19 zugeführt wird. Die Reduzierdüse 19 dient zur einfachen Bestimmung der geförderten Druckluftmenge und zur Erzielung eines konstanten Druckluftstroms. Durch die beiden getrennten Magnetventile 21, 22 wird eine getrennte Druckluftansteuerung erzielt, wodurch eine separate Einstellung des Druckluftzylinders 8 und der Druckluft zur Förderung des Granulats 2 möglich ist. Am Ausgang der Fördereinrichtung 16 wird das Granulat 2 über eine Förderleitung 20 zu der gewünschten Stelle zwischen Schienenrad und Schiene transportiert. Während des Bremsens des Schienenfahrzeuges wird die Dosiereinrichtung 1 aktiviert, also der Dosierkolben 9 in der Dosiereinrichtung gehoben und Granulat 2 in die Fördereinrichtung 16 transportiert, wo es über die Förderleitung 20 in den Spalt zwischen Schienenrad und Schiene transportiert wird und den Reibungswiderstand erhöht und somit den Bremsweg reduziert.

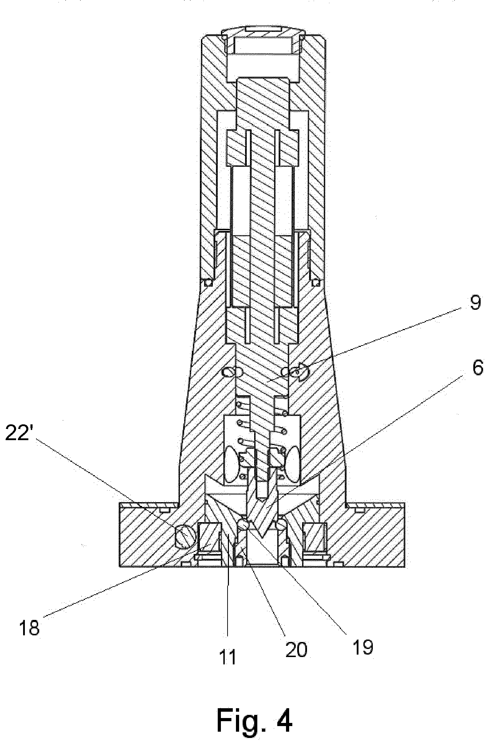

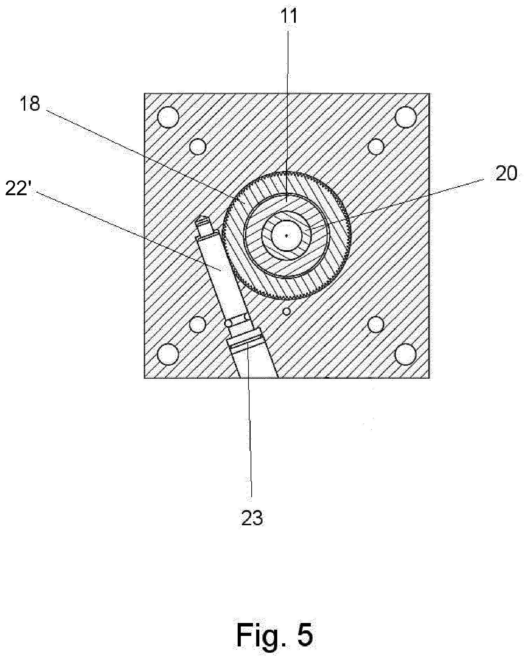

Fig. 4 und Fig. 5 zeigen eine weitere Variante einer druckluftbetätigten Dosiereinrichtung 1 in vertikal und horizontal geschnittener Ansicht wobei die Einstellung des maximalen Hubes Δxₘₐₓ des Dosierkolbens 9 mittels einer Verstellung der Buchse 11 in axialer Richtung, d.h. in Richtung der Achse des Dosierkolbens, erfolgt. Beispielsweise ist die Buchse 11 verschiebbar und gegen Verdrehung gesichert angeordnet und weist an ihrer Aussenfläche ein Gewinde auf. Die Buchse 11 ist von einer Stellmutter 18 umgeben, an deren Innenseite ebenfalls ein Gewinde angeordnet ist, das mit dem Gewinde der Buchse 11 in Eingriff steht. An der Außenseite der Stellmutter 18 befindet sich eine Verzahnung, die mit dem Gewinde einer axial fixierten und drehbaren Antriebsspindel 22' in Eingriff steht. Die Antriebsspindel 22' weist eine Aufnahme 23 für ein Werkzeug (nicht dargestellt) auf. Wird die Antriebsspindel 22' mit dem Werkzeug verdreht, wird die Stellmutter 18 verdreht, wodurch die Buchse 11 in axialer Richtung verschoben wird. Durch die axiale Verstellung der Buchse 11 werden das auf der Buchse 11 allenfalls aufliegende Abdichtelement 6 und der damit verbundene Dosierkolben 9 in Abhängigkeit der Drehrichtung der Antriebsspindel 22' entweder entgegen der Kraft der Feder 7 nach oben gedrückt oder durch die Feder 7 nach unten bewegt, wodurch eine Einstellung des maximalen Hubes Δxₘₐₓ des Dosierkolbens 9 ermöglicht wird.

Zur besseren Abdichtung kann im Auslass 5 ein Dichtring 19 aus elastischem Material, vorzugsweise ein, die ringförmige Dichtfläche bildender, O-Ring angeordnet sein. Zur Frineinstellung der Granulatmenge, kann der Dichtring 19 beispielsweise durch eine Schraubbuchse 20 verformt werden. Die Schraubbuchse 20 weist ein Außengewinde auf, welches mit einem, an der Innenseite der Buchse 11 befindlichen Gewinde in Eingriff steht. Bei Verdrehung der Schraubbuchse 20 wird in Abhängigkeit der Drehrichtung der Dichtring 19 entweder gequetscht, wodurch sein Querschnitt verändert und der Innendurchmesser verringert wird, oder entlastet, wodurch er zu seinem ursprünglichen Querschnitt zurückkehrt. Bei einer Verformung des Dichtrings 19 wird zugleich die Größe der Innenöffnung des Dichtrings 19 verändert, wodurch die auszubringende Menge an Granulat 2 eingestellt bzw. justiert werden kann.

Die erfindungsgemäße Dosiereinrichtung 1 zeichnet sich durch besonders einfachen Aufbau aus und wird ausschließlich durch Druckluft betätigt. Dadurch kann die Dosiereinrichtung in besonders einfacher Weise auch bei Industrieanlagen und Schienenfahrzeugen eingesetzt werden, wo nur Druckluft zur Verfügung steht, und es brauchen keine Maßnahmen dafür getroffen werden, dass elektrische Energie zur Dosiereinrichtung 1 geleitet wird. Dadurch wird der Montageaufwand reduziert und die Möglichkeit eines Einsatzes der Dosiereinrichtung 1 auch bei älteren Schienenfahrzeugen begünstigt.

## Patentansprüche

1. Dosiereinrichtung (1) für Granulat (2), mit einem im Inneren eines Behälters (12) für das Granulat (2) anordenbaren Gehäuse (3) mit zumindest einer Zulauföffnung (4) für das Granulat (2) und einem Auslass (5), welcher Auslass (5) mit einem Abdichtelement (6) verschließbar ist, **dadurch gekennzeichnet, dass** die zumindest eine Zulauföffnung (4) seitlich am Gehäuse (3) und schräg abwärts verlaufend angeordnet ist, dass das Abdichtelement (6) an einem durch eine Feder (7) vorgespannten axial in einem Druckluftzylinder (8) verschiebbaren Dosierkolben (9) angeordnet ist, wobei am Druckluftzylinder (8) ein Druckluftanschluss (10) vorgesehen ist, sodass der Dosierkolben (9) mittels Druckluft gegen die Feder (7) bewegbar und der Auslass (5) öffenbar ist, wobei die Feder (7) zumindest zweistufig ausgebildet ist, sodass der Hub (Δx) des Dosierkolbens (9) durch Variation des Drucks der Druckluft zumindest in zwei Stufen veränderbar ist, dass eine Einrichtung (13) zum Einstellen des maximalen Hubes (Δxₘₐₓ) des Dosierkolbens (9) vorgesehen ist, und dass im Bereich des Auslasses (5) eine Buchse (11) aus formstabilem Material angeordnet ist.

2. Dosiereinrichtung (1) nach Anspruch 1, **dadurch gekennzeichnet, dass** die Buchse (11) aus hoch verschleißfestem Kunststoff gebildet ist.

3. Dosiereinrichtung (1) nach Anspruch 1 oder 2, **dadurch gekennzeichnet, dass** das Abdichtelement (6) aus verschleißfestem elastischem Material gebildet ist.

4. Dosiereinrichtung (1) nach einem der Ansprüche 1 bis 3, **dadurch gekennzeichnet, dass** der Druckluftzylinder (8) und der Dosierkolben (9) senkrecht angeordnet ist.

5. Dosiereinrichtung nach einem der Ansprüche 1 bis 4, **dadurch gekennzeichnet, dass** die Einstelleinrichtung (13) durch eine Einstellschraube (14) gebildet ist.

6. Dosiereinrichtung (1) nach einem der Ansprüche 1 bis 5, **dadurch gekennzeichnet, dass** zumindest zwei Federn (7; 7') angeordnet sind.

7. Dosiereinrichtung nach einem der Ansprüche 1 bis 6, **dadurch gekennzeichnet, dass** die Buchse (11) in Richtung der Achse des Dosierkolbens (9) verstellbar ist, sodass der maximale Hub (Δxₘₐₓ) des Dosierkolbens (9) veränderbar ist.

8. Dosiereinrichtung (1) nach einem der Ansprüche 1 bis 7, **dadurch gekennzeichnet, dass** zwei gegenüberliegende Zulauföffnungen (4) am Gehäuse (3) vorgesehen sind.

9. Dosiereinrichtung (1) nach einem der Ansprüche 1 bis 8, **dadurch gekennzeichnet, dass** die zumindest eine Zulauföffnung (4) in einem Winkel von 30 bis 40° zur Horizontalen schräg abwärts verlaufend angeordnet ist.

10. Dosiereinrichtung (1) nach einem der Ansprüche 1 bis 9, **dadurch gekennzeichnet, dass** an der Unterseite des Gehäuses (3) Befestigungselemente (15) zur Befestigung einer Einrichtung (16) zur Förderung des Granulats (2) vorgesehen sind.

11. Dosiereinrichtung (1) nach einem der Ansprüche 1 bis 10, **dadurch gekennzeichnet, dass** im Auslass (5) ein Dichtring (19) aus elastischem Material, vorzugsweise ein O-Ring angeordnet ist.

12. Dosiereinrichtung (1) nach Anspruch 11, **dadurch gekennzeichnet, dass** eine Einrichtung zur Verformung des Dichtrings (19) vorgesehen ist, beispielsweise eine gegen den Dichtring (19) drehbare Schraubbuchse (20).

## Claims

1. Metering device (1) for granular material (2), comprising a housing (3) that can be arranged inside a container (12) for the granular material (2), said housing comprising at least one feed opening (4) for the granular material (2) and an outlet (5), which outlet (5) can be closed by means of a sealing element (6), **characterised in that** the at least one feed opening (4) is arranged laterally on the housing (3) and so as to extend obliquely downwards, **in that** the sealing element (6) is arranged on a metering piston (9) which is preloaded by means of a spring (7) and can be axially moved in a compressed-air cylinder (8), a compressed-air connection (10) being provided on the compressed air cylinder (8) such that the metering piston (9) can be moved against the spring (7) by means of compressed air and the outlet (5) can be opened, the spring (7) being formed at least in two stages such that the stroke (Δx) of the metering piston (9) can be changed at least in two stages by varying the pressure of the compressed air, **in that** a device (13) is provided for adjusting the maximum stroke (Δxₘₐₓ) of the metering piston (9), and **in that** a bush (11) made of dimensionally stable material is arranged in the region of the outlet (5).

2. Metering device (1) according to claim 1, **characterised in that** the bush (11) is formed of a highly wear-resistant plastics material.

3. Metering device (1) according to either claim 1 or claim 2, **characterised in that** the sealing element (6) is formed of a wear-resistant elastic material.

4. Metering device (1) according to any of claims 1 to 3, **characterised in that** the compressed-air cylinder (8) and the metering piston (9) are arranged vertically.

5. Metering device according to any of claims 1 to 4, **characterised in that** the adjusting device (13) is formed by an adjusting screw (14).

6. Metering device (1) according to any of claims 1 to 5, **characterised in that** at least two springs (7, 7') are arranged.

7. Metering device according to any of claims 1 to 6, **characterised in that** the bush (11) can be shifted in the direction of the axis of the metering piston (9) such that the maximum stroke (Δxₘₐₓ) of the metering piston (9) can be changed.

8. Metering device (1) according to any of claims 1 to 7, **characterised in that** two opposing feed openings (4) are provided on the housing (3).

9. Metering device (1) according to any of claims 1 to 8, **characterised in that** the at least one feed opening (4) is arranged so as to extend obliquely downwards at an angle of 30° to 40° to the horizontal.

10. Metering device (1) according to any of claims 1 to 9, **characterised in that** securing elements (15) are provided on the underside of the housing (3) in order to secure a device (16) for transporting the granular material (2).

11. Metering device (1) according to any of claims 1 to 10, **characterised in that** a sealing ring (19) made of elastic material, preferably an O-ring, is arranged in the outlet (5).

12. Metering device (1) according to claim 11, **characterised in that** a device for deforming the sealing ring (19) is provided, for example, a screw bush (20) which is rotatable in relation to the sealing ring (19).

## Revendications

1. Dispositif de dosage (1) pour granulé (2), avec un boîtier (3) pouvant être disposé à l'intérieur d'un récipient (12) pour le granulé (2), avec au moins une ouverture d'entrée (4) pour le granulé (2) et une sortie (5), cette sortie (5) pouvant être obturée avec un élément d'étanchéité (6), **caractérisé en ce que** l'au moins une ouverture d'entrée (4) est disposée latéralement sur le boîtier (3) et de façon à s'étendre en oblique vers le bas, **en ce que** l'élément d'étanchéité (6) est disposé sur un piston de dosage (9), précontraint par un ressort (7), axialement dans un cylindre à air comprimé (8), un raccordement d'air comprimé (10) étant prévu sur le cylindre à air comprimé (8), de façon à ce que le piston de dosage (9) puisse être déplacé au moyen d'air comprimé contre le ressort (7) et à ce que la sortie (5) puisse être ouverte, le ressort (7) étant conçu au moins sur deux étages, de façon à ce que la course (Δx) du piston de dosage (9) puisse être modifiée par une variation de la pression de l'air comprimé au moins en deux étapes, **en ce qu'**un dispositif (13) pour le réglage de la course maximale (Δxₘₐₓ) du piston de dosage (9) est prévu et **en ce que**, au niveau de la sortie (5), est disposée une douille (11) en matériau stable.

2. Dispositif de dosage (1) selon la revendication 1, **caractérisé en ce que** la douille (11) est constituée d'une matière plastique à haute résistance à l'usure.

3. Dispositif de dosage (1) selon la revendication 1 ou 2, **caractérisé en ce que** l'élément d'étanchéité (6) est constitué d'un matériau élastique résistant à l'usure.

4. Dispositif de dosage (1) selon l'une des revendications 1 à 3, **caractérisé en ce que** le cylindre à air comprimé (8) et le piston de dosage (9) sont disposés verticalement.

5. Dispositif de dosage (1) selon l'une des revendications 1 à 4, **caractérisé en ce que** le dispositif de réglage (13) est constitué d'une vis de réglage (14).

6. Dispositif de dosage (1) selon l'une des revendications 1 à 5, **caractérisé en ce qu'**au moins deux ressorts (7 ; 7') sont disposés.

7. Dispositif de dosage (1) selon l'une des revendications 1 à 6, **caractérisé en ce que** la douille (11) peut être déplacée en direction de l'axe du piston de dosage (9) de façon à ce que la course maximale (Δxₘₐₓ) du piston de dosage (9) puisse être modifiée.

8. Dispositif de dosage (1) selon l'une des revendications 1 à 7, **caractérisé en ce que** deux ouvertures d'entrée (4) opposées sont prévues sur le boîtier (3).

9. Dispositif de dosage (1) selon l'une des revendications 1 à 8, **caractérisé en ce que** l'au moins une ouverture d'entrée (4) est disposée de façon à s'étendre en oblique vers le bas en formant un angle de 30° à 40° par rapport à l'horizontale.

10. Dispositif de dosage (1) selon l'une des revendications 1 à 9, **caractérisé en ce que**, sur le côté inférieur du boîtier (3), sont prévus des éléments de fixation (15) pour la fixation d'un dispositif (16) de convoyage du granulé (2).

11. Dispositif de dosage (1) selon l'une des revendications 1 à 10, **caractérisé en ce que**, au niveau de la sortie (5), est disposée une bague d'étanchéité (19) en matériau élastique, de préférence un joint torique.

12. Dispositif de dosage (1) selon la revendication 11, **caractérisé en ce qu'**un dispositif de déformation de la bague d'étanchéité (19) est prévu, par exemple une douille vissée (20) pouvant tourner contre la bague d'étanchéité (19).
